# EUROPEAN PATENT SPECIFICATION

(11) **EP 1 672 943 B1**
(45) Date of publication and mention of the grant of the patent: **14.01.2009**
(21) Application number: 04766958.5
(22) Date of filing: 24.09.2004
(51) Int. Cl.: H04W 48/16

(54) **SUBSCRIBER IDENTITY CARD FOR A MOBILE PHONE AND CORRESPONDING MOBILE PHONE, METHOD AND PROGRAM PRODUCT**
SIM-KARTE FÜR MOBILTELEFON UND ENTSPRECHENDES MOBILTELEFON, VERFAHREN UND PROGRAMMPRODUKT
CARTE D'IDENTIFICATION D'ABONNÉ POUR TÉLÉPHONE MOBILE, ET TÉLÉPHONE MOBILE, PROCÉDÉ ET PRODUIT-PROGRAMME CORRESPONDANTS

(30) Priority: 02.10.2003 ES 200302281
(43) Date of publication of application: 21.06.2006
(73) Proprietor: Vodafone Group PLC, Newbury Berkshire RG14 2FN (GB)
(72) Inventor: MALDONADO MIRANDA, Carlos, E-28007 Madrid (ES); PORTASANY SÀNCHEZ, Carlos, E-28037 Madrid (ES)
(74) Representative: Keston, David Arthur
(86) International application number: PCT/ES2004/000420
(87) International publication number: WO 2005/032196

(56) References cited:
- WO-A1-02/21871
- US-A1- 2002 028 669
- US-A1- 2002 147 012
- US-A1- 2003 134 637
- US-B1- 6 625 451

## Description

### FIELD OF THE INVENTION

The invention is included in the field of mobile telephony. As is known, in said field, English acronyms and terms are normally used to refer to elements and concepts particular to the field. The English acronyms and terms used in this text will be explained throughout the text.

### BACKGROUND OF THE INVENTION

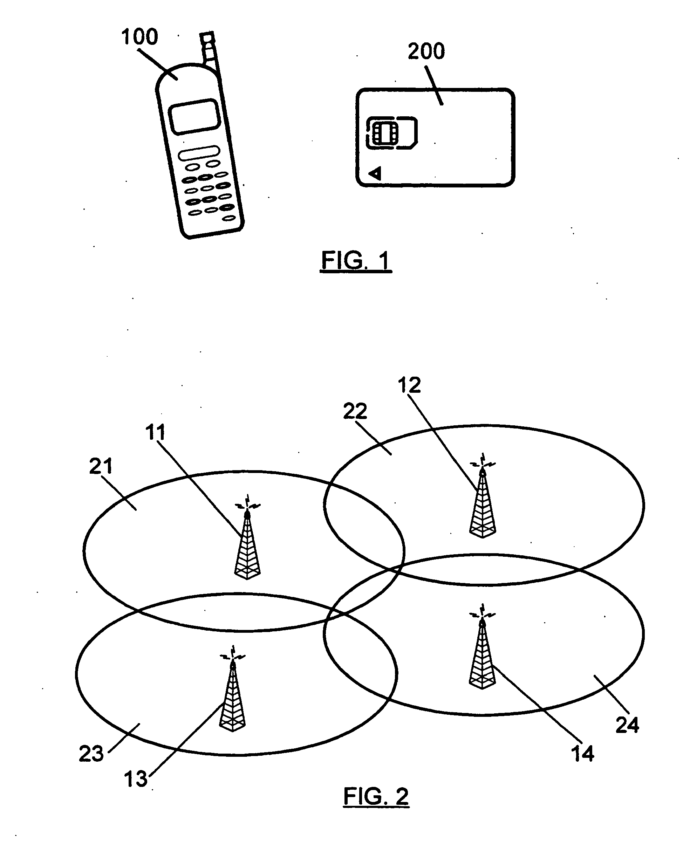

Currently mobile phones usually include a smartcard comprising essential elements for the operation of the telephone. We may talk about "subscriber equipment" (schematically illustrated in Figure 1) comprising, both in the GSM (Global System for Mobile Communication) system and the GPRS (General Packet Radio System) and UMTS (Universal Mobile Telecommunications System - also called Third Generation Mobile Telephony) systems:
- on one hand, a terminal (100) (which is the one which is frequently called "mobile phone" and which includes a casing, display, keyboard, power source and several circuits); and
- on the other hand, the smartcard (200).

A smartcard comprises an electronic device similar to a PC regarding its architecture, but inserted in a plastic card.

Communication of the smartcard with the different external devices is based on 5 byte commands in which the action to be performed is indicated. In some cases, the command is accompanied by data required for executing the action, for example, updating a file in the card. In other cases, it is the card that which must return data to the device that requested the action, for example, when it concerns reading a file.

All the information relative to the operation and architecture of smartcards is included in the ISO 7816 standard (from part 1 to part 9).

The smartcard used in a mobile phone must have either a SIM application (if it is GSM/GPRS) or a USIM application (if it is UMTS) installed.

The SIM (Subscriber Identity Module) application is a module or application which authenticates the GSM/GPRS network subscriber before the network and stores personal information of the user. The USIM (Universal Subscriber Identity Module) application performs the same functions as the SIM application but for the UMTS network.

Amongst its most important functions are the following:
- It stores the user code required for its univocal network identification. Said code is known with the name IMSI (International Mobile Subscriber Identity).
- It carries out the algorithms for the authentication of the user in the corresponding network.
- It calculates the keys for encoding the communication.
- It manages the PINs and their unlocking keys.
- It stores and manages information of the operator.
- It stores and manages information of the user: telephone book, short messages, etc.

All the information about the SIM application is included in the GSM 11.11 standard. The information relative to USIM is included in the standards: 3GPP 31.101 and 3GPP 31.102.

The U/SIM Application Toolkit is a functionality supported on a U/SIM (with U/SIM we refer to "either SIM or USIM") application. At first, the terminals were only able to send commands to the cards, whereas the cards were capable of responding to the commands received from the terminal. Subsequently, there was an evolution in the terminals and the cards which allowed both the sending of commands and their reception. It was thus achieved that a U/SIM application was able to request a terminal to send a short message, make a call, etc. This functionality therefore allows to develop applications dwelling in the card (i.e. which have been locally or remotely loaded in the card) and handling the peripherals of the mobile phone (display, keypad, sending short messages, making calls, etc.), opening the doors to new applications providing an added value to the mobile equipment.

These applications existing in the card and capable of sending commands to the mobile terminal are known with the name SIM Application Toolkit when they are supported on SIM, and USIM Application Toolkits when they are supported on USIM.

U/SIM Application Toolkits are an optional feature both of SIM and USIM applications. High level procedures, contents, and encoding of the commands are specified in the GSM 11.14 standard for SIM applications or the 3GPP TS 31.111 standard for USIM applications.

Document US-A-2002/0147012 describes a method for carrying out the connections of a mobile phone to a desired mobile telephony network, whenever said mobile phone is roaming, but in the situation when the mobile phone is turned on after it has been switched off.

On the other hand, the present invention describes a method for carrying out the connections of a mobile phone to a desired mobile telephony network, also when said mobile phone is roaming, but without a need to turn off the mobile set and turning it on again. The present invention defines how to reconnect a "roaming" mobile phone that, due to one reason or another has lost coverage, to a preferred mobile telephony network instead of any other non-preferred network.

In a cellular mobile telephony network or PLMN (Mobile telephony Network) the geographical area which the network covers is divided in cells, each of which is served by a "base station" or BTS (Base Transceiver Station). Figure 2 schematically shows a possible distribution of some cells (21, 22, 23, 24) and their respective "base stations" (11, 12, 13, 14) for a cellular mobile telephony network. The base station coverage (corresponding to the cells "area") depends on the operational range of the base antennas used for emitting and receiving the network user information. The base antenna coverage range depends on several factors such as, amongst others:
- weather conditions
- geographical conditions
- emitting power
- antenna sensitivity

On the other hand, when the cell distribution is designed, not only these factors have to be taken into account but also other factors such as the maximum number of calls that an antenna may handle at the same time, etc.

Figure 2 schematically shows how the coverage ranges of the different antennas overlap, so that a user may be in contact at all times with at least one antenna. When the user moves around the territory covered by a mobile telephony network, the user may change cells, i.e. pass from one area covered by a first base station to an area covered by a second base station. The user communicates at all times with the base station corresponding to the cell he or she is in; the cellular mobile telephony network is configured to handle the change of base station transparently for the user.

Several cellular mobile telephony networks may normally coexist in a geographical area, each one operated by a cellular mobile telephony operator. The cell distributions of the different networks do not always coincide. The base stations of the different mobile telephony operators may or may not be located in the same place. However, antennas located in nearby places are always subject to similar limitations with regard to coverage, i.e. antennas located in places with few geographical obstacles, such as open fields, will have wide coverage ranges. Nevertheless, antennas located in centre of cities, with many obstacles such as buildings, problems due to reflections, etc., will have small coverage ranges. Each operator has a certain margin for action, increasing the power or sensitivity of the antennas (within the allowed limits of the corresponding official standards and regulations) or purposefully reducing the coverage of certain base antennas to increase the number of subscribers who may generate calls simultaneously in a certain area. However, the antennas in a certain area usually have a coverage range of the same order, and many times the antennas of an operator are located close to those of another operator or operators. This means that in many areas the cell distribution of a mobile telephony network fairly coincides with the cell distribution of other networks.

Some files which are part of the conventional SIM and USIM modules are described below:

### EF_{LOCI} file

The EF_{LOCI} file in a U/SIM module contains information about the cellular mobile telephony network the user is connected to at all times. Amongst other data, it contains the country and operator codes. When a terminal is turned on, it will normally try to connect to the user's home network and then to the network of the operator indicated in this file. If it does not achieve this, due to there not being any coverage, it will try to connect to one of the operators indicated in another "Preferred Networks" file (which we will discuss below), and if it does not manage to connect to any of these either, it will try connecting to any of the available networks. Table 1 schematically shows a part of the structure of the EF_{LOCI} file.

**Table 1**

| Bytes | Description |
|---|---|
| 1-4 | (not relevant in this case) |
| 5-9 | LAI |
| 10 | (not relevant in this case) |
| 11 | (not relevant in this case) |

Bytes 5-9 of the file comprise the LAI, i.e. the Location Area Information code made up of 5 bytes and comprising:
1) MCC (Mobile Country Code); it identifies the country to which the network the user is connected to belongs to. At first, this file is modified each time the user connects to a different network or the TMSI (Temporary Mobile Subscriber Identity) is modified. However, some terminals do not keep this file updated at all times, but practically all use it when the user turns the terminal off.
2) MNC (Mobile Network Code); the MNC is a code which identifies a network within a country; i.e. the MNC of the EF_{LOCI}, therefore and in combination with the MCC, univocally defines the mobile telephony network the user is connected to (provided the LAI has been updated).
3) LAC (Location Area Code) which identifies the location area where the subscriber is operative (a location area usually corresponds to one or more cells).

Table 2 schematically shows the distribution of these codes in the EF_{LOCI} file:

**Table 2**

| Bytes No. | Field |
|---|---|
| 5-6 | MCC |
| 7 | MNC |
| 8-9 | LAC |

*EF_{PLMN_Sel} file*
Table 3 schematically shows part of a conventional EF_{PLMN_Sel} file (for SIM):

**Table 3**

| Bytes | Description | Length |
|---|---|---|
| 1-3 | PLMN No. 1 (maximum priority) | 3 bytes |
| ... | ... | ... |
| 22-24 | PLMN No. 8 | 3 bytes |
| 25-27 | PLMN No. 9 | 3 bytes |
| ... | ... | ... |
| (3n-2)-3n | PLMN No. n (minimum priority) | 3 bytes |

This file indicates the user's preferred networks (PLMNs) or operators, i.e. those the terminal must try to connect to in the event that the user cannot connect to his or her home network (i.e. the network he or she is subscribed to, his or her HPLMN or Home Mobile telephony Network), i.e. in the event that the subscriber starts roaming. Conventionally, in roaming, the terminal will try to connect to one of these preferred networks if it cannot connect to the network indicated in EF_{LOCI}, and will finally try to connect to any of the available networks.

Each 3 byte entry in the EF_{PLMN_Sel} file contains an MCC and an MNC which univocally identify an operator within a certain country. The order in which the operators are saved in the file depends on the operator, if they are factory stored, or on the customer in the event he or she manually introduces them from a terminal menu. The terminal will read the entries in the order in which they are saved, so the first operators will have a higher priority with respect to the last ones. This aspect is important for two reasons: first, because more than one operator may be within the same country, and second, because some terminals only read the first entries and not all the entries of the file.

When the GSM session starts, the terminal explores the GSM spectrum to detect all the available networks. It then looks through the file until it finds a network in the file which is available, and in this case it tries to connect to said network.

The equivalent file in USIM is EF_{PLMNwAcT}; this file has 2 additional bytes per network to indicate the access technology.

### EF_{IMSI} file

This file exists both in SIM and in USIM and contains the IMSI (International Mobile Subscriber Identity) of the mobile phone card which univocally identifies said card within any GSM network at a global level. The IMSI is made up of the following three parts:
- MCC of the user's HPLMN
- MNC of the user's HPLMN
- MSIN (Mobile Subscriber Identification Number - a number which univocally identifies the user's subscription within the HPLMN).

Therefore, the values of the MCC and the MNC of the home network of the subscription (HPLMN) may be obtained directly from the user's IMSI. Normally, when a user turns on his or her mobile phone, the first thing it does is to try to connect to the HPLMN defined by the IMSI.

There are a large number of agreements at a worldwide level to allow international roaming of GSM users, and it is likely that the same will occur with future generations of mobile telephony. Therefore, as an example, a customer from a Spanish operator (operating a network which only covers Spain and which is the HPLMN of the user) may use his or her mobile terminal in other countries (Germany, Portugal, etc.) by using the network of any local operator who has a roaming agreement with the Spanish operator.

It is usual for a mobile telephony operator to have roaming agreements with more than one operator of a certain country. However, these agreements are not always equally advantageous for a customer. It may happen that when the user is in international roaming in a certain country, he or she obtains different rates according to the operator he or she connects to. Likewise, it may be more interesting for the operator with which he or she has the mobile telephony service contracted with that the user connects to a specific operator when in roaming.

Therefore, the need arises to being able to suitably choose the operator a mobile telephony subscriber connects to when he or she is performing a national or international roaming. There are several solutions:

An operator may manage which network the subscriber must connect to by modifying the EF_{PLMNSel} file inside the SIM card. As discussed above, this file indicates the customer's preferred operators, i.e. those which the terminal must try to connect to in the event that the customer starts roaming. However, if at the time of connection to the network the terminal does not find any of these networks, it will connect to any other of the available ones. In subsequent connections to the network (and provided the HPLMN is not available), the terminal will always try to connect to the last network it was connected to (defined in EF_{LOCI}), so that the EF_{PLMNSel} file may not have any effect. For example, if a subscriber to the Spanish HPLMN ES1 travels to Italy, and the Italian network IT1 is included in his or her preferred network list (as the first option for Italy), as soon as the user starts roaming, the terminal will try to connect to IT1. However, if it does not manage to connect to IT1 in the first attempt, the terminal will connect to any other available operator, for example, another Italian operator IT2. If the customer does not lose coverage with IT2 at any time during his or her stay in Italy and does not manually modify the network he or she is connected to, he or she will remain connected to IT2 during his or her entire stay, which might not be the most favourable option for the user.

Another known system is based on the configuration of certain nodes in the mobile telephony network so that the user connects exclusively to the desired operators. Basically, the HLRs (Home Location Registers) are modified, preventing the subscriber from connecting to any operator that is not within the preferred networks. However, this system implies some possible drawbacks:
- it requires modifying the network;
- it does not allow connecting to the available networks, even if there is no coverage by the preferred ones (which could mean legal problems, for example, in connection with a call attempt to an emergency number);
- it is a solution that some manufacturers propose proprietarily, so it could be of no application to all mobile telephony operators.

Another solution is based on using terminals configured for connecting exclusively to a series of operators. The configuration could be both in a terminal file and in a SIM card file, for example the aforementioned EF_{PLMNSel} file. However, this solution would reduce the roaming possibilities, given that if none of the "allowed" operators is available, the telephone cannot be used.

There is a type of terminals belonging to the Release 99 or R99, which covers a set of GSM standards. R99 terminals try to keep connected to one of the operators defined in the EF_{PLMNSel} file. If at any time they do not find any of the preferred networks available, they connect to any of the other available networks. From that moment onwards they devote themselves to scanning the GSM spectrum with a predetermined periodicity until they detect that one of the preferred networks is available, and in that case they try to connect to said network. The aim of these R99 terminals is, therefore, to keep the user connected to the desired network. However, the problem is that R99 terminals achieve this aim based on a special internal operation of the terminal, which makes the solution applicable only to these terminals and not applicable to all mobile phones. R99 terminals currently represent only a very small part of the terminals in use.

It is an object of the invention to allow that a user who has connected to a hardly-preferred operator during roaming may be connected to a more preferred operator without having to turn off the phone and substantially independently from the type of terminal he or she uses.

### DESCRIPTION OF THE INVENTION

A first aspect of the invention refers to a user identification card (U/SIM card, i.e. SIM or USIM) for its use in a cellular mobile phone comprising, at least, a terminal and said card, as defined in Claim 1. The card at least comprises:
- a first file (the U/SIM EF_{IMSI} file, for example) including an identifier (MCC+MNC, for example) for a home mobile telephony network (HPLMN);
- a second file (the U/SIM EF_{LOCI} file, for example) wherein, by means of a current network identifier (MCC+MNC of the network the user is connected to, for example), a current mobile telephony network the user is connected to is defined, said current network identifier including a current country identifier (the MMC of the network the user is connected to, for example);
- at least a third file wherein, by means of at least one identifier (MCC+MNC of the corresponding mobile telephony networks, for example), at least one preferred mobile telephony network is defined (this third file may be a "dedicated" file, used specifically to implement the invention in the card);
- detection means for continuously monitoring whether a predetermined event occurs while the mobile phone is on;
- response means configured for, if said event occurs and in response to said event, verifying whether the mobile phone is connected to a preferred mobile telephony network defined in the third file or to its home mobile telephony network (HPLMN) and:
   i) if the mobile phone is connected to a preferred mobile telephony network defined in the third file or to the home mobile telephony network (HPLMN), or if no preferred mobile telephony network defined in the third file corresponds to the current country (for example, because no preferred mobile telephony network defined in the third file has an MCC coinciding with the MCC of the current country), not modifying the current network identifier in the second file
   ii) if the mobile phone is connected to a mobile telephony network which is not a preferred mobile telephony network defined in the third file or the home mobile telephony network (HPLMN), and if at least one mobile telephony network defined in the third file corresponds to the current country (for example, because it has an MCC coinciding with the MCC of the current country), performing the following steps:
      a) modifying the current network identifier in the second file so that it has the value of a preferred mobile telephony network identifier selected from the third file and corresponding to the current country;
      b) sending a command to the mobile phone terminal to reconnect the mobile phone to a mobile telephony network such that the mobile phone tries to connect to the mobile telephony network defined by the modified current network identifier in the second file, and if this is not possible, tries to connect to one of the preferred mobile telephony networks defined in the third file (this may be achieved, for example, by introducing the preferred networks defined in the third file in the EF_{PLMN_Sel} file (in SIM) or the EFp_{LMNwAcT} file (in USIM)).

The predetermined event may be at least an event selected from events defined in the ETSI GSM 11.14 standard, version 8.4.0.

The predetermined event may be at least one event selected from a group of events including a notification indicative of a change in location area, transmitted from the terminal to the card. In fact, the predetermined event may be exclusively the notification indicative of a change in location area, transmitted from the terminal to the card. The selection of this event for "triggering" the network change attempt may be especially advantageous, as the possibility of finding a "new available network" increases in the areas of the "borders" between the network cells (as discussed above, the cell structures of several networks operating in a region usually coincide in a substantial manner).

The response means may comprise means for verifying the identity of the mobile telephony network the user is connected to by means of verifying the current network identifier in the second file.

The response means may alternatively comprise means for verifying the identity of the mobile telephony network the subscriber is connected to by means of the SIM Toolkit *Provide Local Information* command or by means of the analysis of the SIM Toolkit *Location Status* command.

The command for reconnecting the mobile phone may be the SIM Toolkit *REFRESH* command.

The card of the invention may comprise means for copying the contents of the third file into a fourth file including preferred mobile telephony network identifiers, in order for the mobile phone to be able to connect to one of the preferred mobile telephony networks defined in the third file by extracting the identifiers from the fourth file; this fourth file could be the EF_{PLMN_Sel} file in SIM or the EF_{PLMNwAcT} file in USIM.

The detection means and the response means may be set up by means of at least one U/SIM Application Toolkit.

A second aspect of the invention, defined in claim 12, refers to a mobile phone comprising a terminal and a card according to the first aspect of the invention; the mobile phone is configured so that it tries to connect by default to a network corresponding to the current network identifier in the second file.

A third aspect of the invention refers to a method, as defined in Claim 13, for carrying out the connection of a mobile phone to a desired mobile telephony network for a mobile phone comprising a terminal and a user identification card comprising at least:
- a first file (EF_{IMSI}, for example) including an identifier (MCC+MNC, for example) for a home mobile telephony network (HPLMN);
- a second file (the EF_{LOCI}, for example) in which, by means of a current network identifier (MCC+MNC of the network the subscriber is connected to, for example), a current mobile telephony network the subscriber is connected to is defined, said current network identifier including a current country identifier (the MMC of the network the subscriber is connected to, for example);
- at least a third file in which, by means of at least one identifier (MCC+MNC of the preferred network or networks, for example), at least one preferred mobile telephony network is defined.

The method comprises the steps of:
- continuously monitoring if a predetermined event occurs while the mobile phone is on;
- if said event occurs, and in response to said event, verifying whether the mobile phone is connected to a preferred mobile telephony network defined in the third file or to its home mobile telephony network (HPLMN) and:
   i) if the mobile phone is connected to a preferred mobile telephony network defined in the third file or to the home mobile telephony network (HPLMN), or if no preferred mobile telephony network defined in the third file corresponds to the current country, not modifying the current network identifier in the second file
   ii) if the mobile phone is connected to a mobile telephony network which is not a preferred mobile telephony network defined in the third file or the home mobile telephony network (HPLMN), and if at least one mobile telephony network defined in the third file corresponds to the current country:
      a) modifying the current network identifier in the second file (for example, EF_{LOCI} so that it has the value of a preferred mobile telephony network identifier selected from the third file and corresponding to the current country;
      b) sending a command to the mobile phone terminal to reconnect the mobile phone to a mobile telephony network such that the mobile phone tries to connect to the mobile telephony network defined by the modified current network identifier in the second file (EF_{LOCI}, for example), and if this is not possible, tries to connect to one of the preferred mobile telephony networks defined in the third file (this may be achieved, for example, by introducing the preferred networks defined in the third file in the (fourth) EF_{PLMN-Sel} (in SIM) or EF_{PLMNwAcT} (in USIM)) file.

The predetermined event may be at least an event selected from the events defined in the ETSI GSM 11.14 standard, version 8.4.0.

Alternatively, the predetermined event may be at least one event selected from a group of events including a notification indicative of a change in location area transmitted from the terminal to the card; in fact, the predetermined event may be exclusively the notification indicative of a change in location area, transmitted from the terminal to the card.

The method may comprise the step of verifying the identity of the mobile telephony network the user is connected to by means of verifying the current network identifier in the second file.

Alternatively, the method may comprise the step of verifying the identity of the mobile telephony network the user is connected to by using the SIM Toolkit *Provide Local Information* command or the SIM Toolkit *Location Status* command.

The command for reconnecting the mobile phone may be the SIM Toolkit *REFRESH* command.

The method may comprise the step of copying the contents of the third file into a fourth file including preferred mobile telephony networks identifiers, in order for the mobile phone to be able to connect to one of the preferred mobile telephony networks defined in the third file by extracting the identifiers from the fourth file (which could be the EF_{PLMN_Sel} file in SIM or the EF_{PLMNwAcT} file in USIM.

The method may comprise the additional step of loading on the card a SIM Application Toolkit configured for carrying out the steps described above.

A fourth aspect of the invention refers to a program product defined in Claim 24 (a U/SIM Application Toolkit, for example) comprising program instruction means to carry out the method defined in any of the previous claims when the program is run on a mobile phone card. The product may be stored in a program support medium, in a U/SIM card, a floppy disk, or a computer memory, for example.

### BRIEF DESCRIPTION OF THE DRAWINGS

A series of drawings will now be very briefly described aiding to better understand the invention and which are expressly related to an embodiment of said invention shown as an illustrative and non-limiting example thereof.

Figure 1 schematically shows the components of mobile telephony user equipment.

Figure 2 schematically shows several cells of a cellular mobile telephony network with their respective base stations.

Figure 3 schematically shows some of the components or modules forming part of the card according to a preferred embodiment of the invention.

Figure 4 schematically shows a series of steps forming part of the method according to a preferred embodiment of the invention.

### DESCRIPTION OF A PREFERRED EMBODIMENT OF THE INVENTION

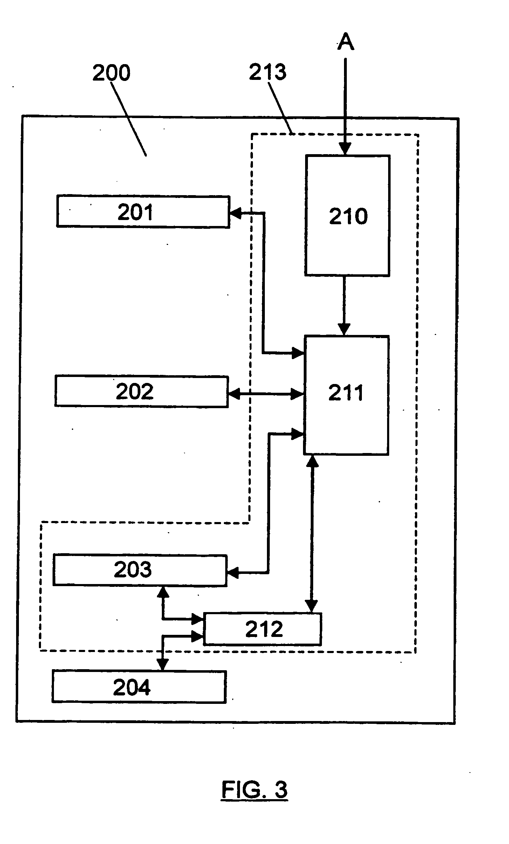

As may be seen in Figure 3, a card (200) according to the invention may comprise:
- a first file (201) (EF_{IMSI}) including an identifier (MCC+MNC) for a home mobile telephony network (HPLMN);
- a second file (202) (EF_{LOCI}) in which, by means of a current network identifier (MCC+MNC of the network the user is connected to), a current mobile telephony network the user is connected to is defined, said current network identifier including a current country (i.e. the country the user is operating in, which may be the country of the HPLMN or a country in which the user is roaming) identifier (specifically, the MMC of the network the user is connected to);
- at least a third file (203) in which, by means of at least one identifier (MCC+MNC of the preferred networks), at least one preferred mobile telephony network is defined;
- detection means (210) for continuously monitoring whether a predetermined event (A) occurs while the mobile phone is on;
- response means (211) configured for, if said event occurs and in response to said event (A), verifying whether the mobile phone is connected to a preferred mobile telephony network defined in the third file (203) or to its home mobile telephony network (HPLMN) and:
   i) if the mobile phone is connected to a preferred mobile telephony network defined in the third file (203) or to the home mobile telephony network (HPLMN), or if no preferred mobile telephony network defined in the third file (203) corresponds to the current country, not modifying the current network identifier in the second file (202);
   ii) if the mobile phone is connected to a mobile telephony network which is not a preferred mobile telephony network defined in the third file (203) or the home mobile telephony network (HPLMN), and if at least one mobile telephony network defined in the third file (203) corresponds to the current country, performing the following steps:
      a) modifying the current network identifier in the second file (202) so that it has the value of a preferred mobile telephony network identifier selected from the third file (203) and corresponding to the current country;
      b) sending a command to the terminal (100) to reconnect the mobile phone to a mobile telephony network such that the mobile phone tries to connect to the mobile telephony network defined by the modified current network identifier in the second file (202), and if this is not possible, tries to connect to one of the preferred mobile telephony networks defined in the third file (203) (this may be achieved, for example, by introducing the preferred networks defined in the third file (203) in a fourth file (204), which may be EF_{PLMN_Sel} (in SIM) or EF_{PLMNwAcT} (in USIM), by means of copying means (212) for copying the contents of the third file (203) into a fourth file (204)). The third file (203), as well as the detection means (210), the response means (211) and the copying means (212) may be integrated in a network management module (213).

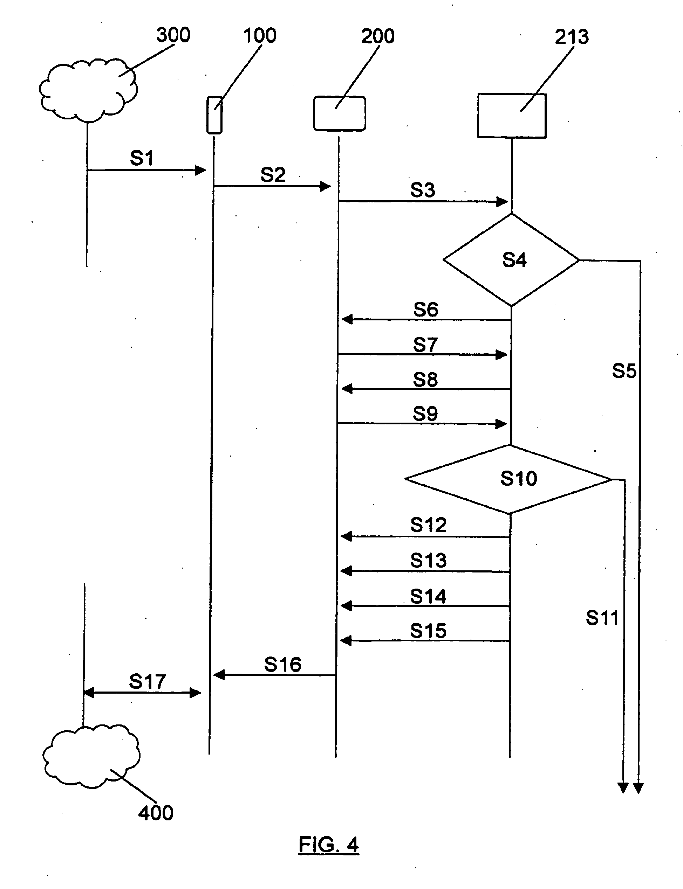

Figure 4 schematically illustrates how the method according to the invention may be carried out, applied to a card according to Figure 3:
Step S1: change of location: the network (300) the user is connected to decides to perform a "hand-over" or cell change for a user due to the loss of coverage or other circumstances, so it performs an interaction with the terminal so that it may execute the change.
Step S2: the terminal (100) notifies the card (200) (or, rather, the U/SIM application of the card) of the change in location by means of the *Location Status* event; this step represents "event A" (Figure 3) which triggers the execution of a network managing application based on the method of the invention.
Step S3: the U/SIM application of the card (200) notifies the network management module (213) of the event.
Step S4: the network management module (213) itself verifies whether it is activated.

If it is not activated, it ends the execution of the network management application (step S5) without performing the steps discussed below.

If it is activated, the network management module (213) asks (step S6) the card for the identification of the network the user is connected to by means of consulting the second file (202) (EF_{LOCI}), by executing the *Provide Local Information* command or by obtaining the information from the *Location Status* event. The management module obtains (step S7) a current network identifier (specifically, MCC+MNC of the network (300) the user is connected to).

Step S8: the network management module (213) asks for the home mobile telephony network (HPLMN) of the card. This information may be obtained, for example, from the EF_{IMSI} file.

Step S9: the network management module receives the information on the home mobile telephony network (specifically MCC+MNC of the HPLMN).

Step S10: the network management module verifies whether the mobile phone is connected to a preferred mobile telephony network (defined in the third file (203)) or to its home mobile telephony network (HPLMN). If the affirmative case, i.e. if the mobile phone is connected to a preferred mobile telephony network defined in the third file (203) or to its home mobile telephony network (HPLMN), the execution of the application corresponding to the network management module (213) is ended (step S11). If the negative case, i.e. if the mobile phone is not connected to a preferred mobile telephony network defined in the third file (203) nor to its home mobile telephony network (HPLMN), it is verified whether there is any preferred mobile telephony network defined in the third file (203) corresponding to the current country, i.e. to the country of the network (300) the user is connected to (i.e. it is verified if the MCC of any of the networks defined in the third file corresponds to the MCC of the network (300) the user is connected to). If no preferred mobile telephony network defined in the third file (203) corresponds to the current country, the execution of the application corresponding to the network management module (213) is likewise ended (step 11). Otherwise, i.e. if there is (at least) one preferred mobile telephony network defined in the third file (203) the MCC of which corresponds to the MCC of the network (300) the user is connected to, the execution of the application is continued and step S12 is proceeded to.

Step S12: the second file (202) is initialised (the file indicating which is the network the customer is connected to at that moment, for example, the EF_{LOCI} file), so that when it is consulted by the terminal the latter knows that it has to perform a new negotiation with the network.

Step S13: in the second file (202) (EF_{LOCI}, for example) it is indicated that the last network the customer connected to is one of the user's preferred networks, so that the terminal will start negotiating with one of them. Specifically, the current network identifier is modified in the second file (202) such that it has the value of a preferred mobile telephony network identifier (400) chosen from the third file (203) and corresponding to the current country. The information about the preferred networks is in the third file (203), a dedicated file created specifically for this service, which may be managed by the operator, the user or both.

Step S14: the contents of the third file (203) are copied into a fourth file (204) which includes preferred mobile telephony network identifiers in order for the mobile phone to be able to connect to one of the preferred mobile telephony networks defined in the third file (203) by extracting the identifiers from the fourth file (204). The fourth file is the conventional preferred network file read by the terminal (EF_{PLMN-Sel} in the case of SIM, or EF_{PLMNwAcT} in the case of USIM), and is now modified from the data in the third file, given that the fourth file may have been modified when the terminal connected to a non-preferred network. The fourth file (204), which is the preferred network file read by the terminal (as defined in the related standards: EF_{PLMN-Sel} in the case of SIM or EF_{PLMNwAcT} in the case of USIM) must be differentiated from the third file (203), which is a dedicated file which has been included in the smartcard so that it is used by the network management module (213).

Step S15: the network management module (213) generates a command to indicate the terminal to perform a network reconnection (a REFRESH command, for example). Due to the actions carried out in the previous steps, the terminal will try to connect to one of the preferred mobile telephony networks originally present in the third file (203) (specifically, to the preferred network defined in the second file (202), and if it does not manage to connect to said network, to one of the networks now defined in the fourth file (204)).

Step S16: the command (REFRESH, for example) is sent from the card (200) to the terminal (100).

Step S17: the terminal negotiates the new connection with the preferred mobile telephony network (400) (provided said network is available) and carries out the reconnection to the network. If the preferred mobile telephony network is not available, the mobile phone will connect to another network, starting by trying to connect to one of the mobile telephony networks now defined in the fourth file (204).

Throughout the present description and claims the word "comprises" and variations thereof, such as "comprising", do not intend to exclude other steps or components.

## Claims

1. A subscriber identification card (200) for its use in a mobile cell phone comprising at least a terminal (100) and said card (200), the card (200) comprising at least:
- means for storing in a first file (201) an identifier of a home mobile telephony network (HPLMN);
- means for storing in a second file (202) a current network identifier defining a current mobile telephony network the user is connected to and including a current country identifier;
- means for storing in at least a third file (203) at least one identifier defining at least one preferred mobile telephony network;
- detection means (210) configured for continuously monitoring whether a predetermined event (A) occurs while the mobile phone is on; and
- response means (211) configured, in response to the occurence of said predetermined event (A), for verifying whether the mobile phone is connected to a preferred mobile telephony network defined in the third file (203) or to its home mobile telephony network (HPLMN) and:
i) in response to the mobile phone being connected to a preferred mobile telephony network defined in the third file (203) or to the home mobile telephony network (HPLMN), or in response to no preferred mobile telephony network defined in the third file (203) corresponding to the current country, the response means (211) being configured for causing the second storing means to not modify the current network identifier in the second file (202);
ii) in response to the mobile phone being connected to a mobile telephony network which is not a preferred mobile telephony network defined in the third file (203) or the home mobile telephony network (HPLMN), and in response to at least one mobile telephony network defined in the third file (203) corresponding to the current country:
a) the response means (211) being further configured for modify the current network identifier in the second file (202)to the value of a preferred mobile telephony network identifier selected from the third file (203) and corresponding to the current country; and
b) the response means (211) being further configured for sending a command, which is the SIM Toolkit *REFRESH* command to the mobile phone terminal (100) causing the mobile phone to reconnect to a mobile telephony network, being in an initial attempt the mobile telephony network defined by the modified current network identifier in the second file (202), and in response to the initial attempt being unsuccessful, being in further attempts one of the preferred mobile telephony networks defined in the third file (203).

2. A card according to claim 1, **characterised in that** the event (A) is at least one event selected from events defined in the ETSI GSM 11.14 standard, version 8.4.0.

3. A card according to claim 1, **characterised in that** the event (A) is at least one event selected from a group of events including a notification indicative of a change in location area, transmitted from the terminal (100) to the card (200).

4. A card according to claim 3, **characterised in that** the predetermined event (A) is a notification indicative of a change in location area, transmitted from the terminal (100) to the card (200)

5. A card according to any of the previous claims, **characterised in that** the response means comprise means for verifying the identity of the mobile telephony network the user is connected to, by means of verifying the current network identifier in the second file (202).

6. A card according to any of claims 1-4, **characterised in that** the response means (211) comprise means for verifying the identity of the mobile telephony network the user is connected to, by means of the SIM Toolkit *Provide Local Information* command.

7. A card according to any of claims 1-4, **characterised in that** the response means (211) comprise means for verifying the identity of the mobile telephony network the user is connected to, by means of analysing the SIM Toolkit *Location Status* command.

8. A card according to any of the previous claims, **characterised in that** the first file (201) is the U/SIM *EF_{IMSI}* file and **in that** the second file (202) is the U/SIM *EF_{LOCI}* file.

9. A card according to any of the previous claims, **characterised in that** it comprises means for copying (212) the contents of the third file (203) into a fourth file (204) including preferred mobile telephony network identifiers, in order for the mobile phone to be able connect to one of the preferred mobile telephony networks defined in the third file (203) by extracting the identifiers from the fourth file (204).

10. A card according to claim 9, **characterised in that** the fourth file (204) is the SIM *EF_{PLMN-Sel}* or the USIM *EF_{PLMNwAcT}* file.

11. A card according to any of the previous claims, **characterised in that** the detection means (210) and the response means (211) are set up by at least one U/SIM Application Toolkit.

12. A mobile phone that comprises a terminal (100) and a subscriber identification card (200) according to any of the previous claims, the mobile phone being configured for connecting by default to a network corresponding to the current network identifier in the second file (202).

13. A method for carrying out the connection of a mobile phone to a desired mobile telephony network for a mobile phone comprising a terminal (100) and a subscriber identification card (200) comprising at least:
- storing in a first file an identifier of a home mobile telephony network HPLMN);
- storing in a second file a current network identifier defining a current mobile telephony network the subscriber is connected to, said current network identifier including a current country identifier;
- storing in at least a third file (203) at least one identifier defining at least one preferred mobile telephony network;
- continuously monitoring if a predetermined event (A) occurs while the mobile phone is on;
- if said event occurs, and in response to said predetermined event (A), verifying whether the mobile phone is connected to a preferred mobile telephony network defined in the third file (203) or to its home mobile telephony network (HPLMN) and:
i) if the mobile phone is connected to a preferred mobile telephony network defined in the third file (203) or to the home mobile telephony network (HPLMN), or if no preferred mobile telephony network defined in the third file (203) corresponds to the current country, not modifying the current network identifier in the second file (202);
ii) if the mobile phone is connected to a mobile telephony network which is not a preferred mobile telephony network defined in the third file (203) or the home mobile telephony network (HPLMN), and if at least one mobile telephony network defined in the third file (203) corresponds to the current country:
a) modifying the current network identifier in the second file (202) so that it has the value of a preferred mobile telephony network identifier selected from the third file (203) and corresponding to the current country;
b) send a command, which is the SIM Toolkit *REFRESH* to the mobile phone terminal (100) to reconnect the mobile phone to a mobile telephony network the method being **characterised in that**, in response to the SIM Toolkit REFRESH command, the mobile phone tries to connect to the mobile telephony network defined by the modified current network identifier in the second file (202), and if this is not possible, tries to connect to one of the preferred mobile telephony networks defined in the third file (203).

14. A method according to claim 13, **characterised in that** the event (A) is at least one event selected from events defined in the ETSI GSM 11.14 standard, version 8.4.0.

15. A method according to claim 13, **characterised in that** the event (A) is at least one event selected from a group of events including a notification indicative of a change in location area, transmitted from the terminal (100) to the card (200).

16. A method according to claim 15, **characterised in that** the predetermined event (A) is a notification indicative of a change in location area, transmitted from the terminal (100) to the card (200).

17. A method according to any of claims 13-16, **characterised in that** it comprises the step of verifying the identity of the mobile telephony network the user is connected to by means of verifying the current network identifier in the second file (202).

18. A method according to any of claims 13-16, **characterised in that** it comprises the step of verifying the identity of the mobile telephony network the user is connected to by means of the SIM Toolkit *Provide Local Information* command.

19. A method according to any of claims 13-16, **characterised in that** it comprises the step of verifying the identity of the mobile telephony network the user is connected to by means of analysing the SIM Toolkit *Location Status* command.

20. A method according to any of claims 13-19, **characterised in that** the first file (201) is the U/SIM *EF_{IMSI}* file, and **in that** the second file (202) is the U/SIM *EF_{LOCI}* file.

21. A method according to any of claims 13-20, **characterised in that** it comprises the step of copying the contents of the third file (203) into a fourth file (204) including preferred mobile telephony network identifiers, in order for the mobile phone to be able to connect to one of the preferred mobile telephony networks defined in the third file (203) by extracting the identifiers from the fourth file (204).

22. A method according to claim 21, **characterised in that** the fourth file (204) is the SIM *EF_{PLMN-Sel}* or the USIM *EF_{PLMNwAcT}* file.

23. A method according to any of claims 13-22, **characterised in that** it comprises the additional step of loading in the card (200) a U/SIM Application Toolkit configured to carry out the steps of the method defined in any of claims 13-22.

24. A program product comprising a program running on a processor in a subscriber identification card **characterised in that** it comprises program instruction means to carry out the steps of the method defined in any of claims 13-23.

25. A product according to claim 24, **characterised in that** the program is stored in a program support means.

## Patentansprüche

1. Teilnehmeridentifizierungskarte (200) für die Verwendung in einem zellularen Mobiltelefon, welches zumindest ein Endgerät (100) und die genannte Karte (200) umfasst, wobei die Karte (200) zumindest Folgendes umfasst:
- Mittel zum Speichern einer Kennung eines Heimat-Mobilfunknetzes (HPLMN) in einer ersten Datei (201);
- Mittel zum Speichern einer aktuellen Netzwerkkennung, welche ein aktuelles Mobilfunknetz definiert, mit dem der Nutzer verbunden ist, und welche eine aktuelle Landeskennung beinhaltet, in einer zweiten Datei (202);
- Mittel zum Speichern zumindest einer Kennung, welche zumindest ein bevorzugtes Mobilfunknetz definiert, in zumindest einer dritten Datei (203);
- Detektionsmittel (210), welche dazu ausgebildet sind, um fortlaufend zu überwachen, ob ein vorbestimmtes Ereignis (A) eintritt, während das Mobiltelefon eingeschaltet ist; und
- Ansprechmittel (211), welche in Beantwortung des Auftretens des genannten vorbestimmten Ereignisses (A) ausgebildet sind, um zu überprüfen, ob das Mobiltelefon mit einem bevorzugten Mobilfunknetz verbunden ist, welches in der dritten Datei (203) definiert ist, oder mit seinem Heimat-Mobilfunknetz (HPLMN), und:
- wobei in Beantwortung darauf, dass das Mobiltelefon mit einem bevorzugten Mobilfunknetz verbunden ist, welches in der dritten Datei (203) definiert ist, oder mit dem Heimat-Mobilfunknetz (HPLMN), oder in Beantwortung darauf, dass kein bevorzugtes Mobilfunknetz, welches in der dritten Datei (203) definiert ist, dem aktuellen Land entspricht, die Ansprechmittel (211) ausgebildet sind, um die zweiten Speichermittel die aktuelle Netzwerkkennung in der zweiten Datei (202) nicht verändern zu lassen;
- wobei in Beantwortung darauf, dass das Mobiltelefon mit einem Mobilfunknetz verbunden ist, welches kein bevorzugtes Mobilfunknetz ist, das in der dritten Datei (203) definiert ist, oder das Heimat-Mobilfunknetz (HPLMN), und in Beantwortung darauf, dass zumindest ein Mobilfunknetz (203), das in der dritten Datei (203) definiert ist, dem aktuellen Land entspricht:
a) die Ansprechmittel (211) ausgebildet sind, um die zweiten Speichermittel die aktuelle Netzwerkkennung in der zweiten **Datei (202) auf den Wert einer bevorzugten** Mobilfunknetzkennung verändern zu lassen, die aus der dritten Datei (203) ausgewählt ist, und die dem aktuellen Land entspricht; und
b) die Ansprechmittel (211) desweiteren ausgebildet sind, um einen Befehl, den SIM-Toolkit-Befehl *REFRESH,* zum Mobiltelefonendgerät (100) zu senden, was dazu führt, dass das Mobiltelefon sich wieder mit einem Mobilfunknetz verbindet, welches in einem anfänglichen Versuch das Mobilfunknetz ist, welches durch die veränderte aktuelle Netzwerkkennung in der zweiten Datei (202) definiert ist, und in Beantwortung darauf, dass der anfängliche Versuch scheitert, es in weiteren Versuchen eines der bevorzugten Mobilfunknetze ist, welche in der dritten Datei (203) definiert sind.

2. Karte nach Anspruch 1, **dadurch gekennzeichnet, dass** das Ereignis (A) zumindest ein aus im Standard ETSI GSM 11.14, Version 8.4.0 definierten Ereignissen ausgewähltes Ereignis ist.

3. Karte nach Anspruch 1, **dadurch gekennzeichnet, dass** das Ereignis (A) zumindest ein aus einer Gruppe von Ereignissen ausgewähltes Ereignis ist, einschließlich einer Benachrichtigung, die eine Änderung in der Location Area angibt, die vom Endgerät (100) zur Karte (200) übertragen wird.

4. Karte nach Anspruch 3, **dadurch gekennzeichnet, dass** das vorbestimmte Ereignis (A) eine Benachrichtigung ist, die eine Änderung in der Location Area angibt, die vom Endgerät (100) zur Karte (200) übertragen wird.

5. Karte nach einem der vorherigen Ansprüche, **dadurch gekennzeichnet, dass** die Ansprechmittel Mittel zum Überprüfen der Identität des Mobilfunknetzes umfassen, mit dem der Nutzer verbunden ist, indem die aktuelle Netzwerkkennung in der zweiten Datei (202) überprüft wird.

6. Karte nach einem der Ansprüche 1 bis 4, **dadurch gekennzeichnet, dass** die Ansprechmittel (211) Mittel zum Überprüfen der Identität des Mobilfunknetzes umfassen, mit dem der Nutzer verbunden ist, durch den SIM-Toolkit-Befehl *Provide Local Information.*

7. Karte nach einem der Ansprüche 1 bis 4, **dadurch gekennzeichnet, dass** die Ansprechmittel (211) Mittel zum Überprüfen der Identität des Mobilfunknetzes umfassen, mit dem der Nutzer verbunden ist, indem der SIM-Toolkit-Befehl *Location Status* analysiert wird.

8. Karte nach einem der vorherigen Ansprüche, **dadurch gekennzeichnet, dass** die erste Datei (201) die U/SIM EF_{IMSI}-Datei ist, und dass die zweite Datei (202) die U/SIM EF_{LOCI}-Datei ist.

9. Karte nach einem der vorherigen Ansprüche, **dadurch gekennzeichnet, dass** sie Mittel zum Kopieren (212) der Inhalte der dritten Datei (203) in eine vierte Datei (204) umfasst, welche bevorzugte Mobilfunknetzkennungen einschließt, damit das Mobiltelefon sich mit einem der bevorzugten Mobilfunknetze verbinden kann, die in der dritten Datei (203) definiert sind, indem die Kennungen aus der vierten Datei (204) entnommen werden.

10. Karte nach Anspruch 9, **dadurch gekennzeichnet, dass** die vierte Datei (204) die SIM EF_{PLMN-Sel}-Datei oder die USIM EF_{PLMNwAcT}-Datei ist.

11. Karte nach einem der vorherigen Ansprüche, **dadurch gekennzeichnet, dass** die Detektionsmittel (210) und die Ansprechmittel (211) durch zumindest ein U/SIM Application Toolkit konfiguriert sind.

12. **Mobiltelefon, welches ein Endgerät (100) und eine** Teilnehmeridentifizierungskarte (200) nach einem der vorherigen Ansprüche umfasst, wobei das Mobiltelefon ausgebildet ist, um sich standardmäßig mit einem der aktuellen Netzwerkkennung in der zweiten Datei (202) entsprechenden Netz zu verbinden.

13. Verfahren zum Ausführen der Verbindung eines Mobiltelefons mit einem gewünschten Mobilfunknetz für ein Mobiltelefon, das ein Endgerät (100) und eine Teilnehmeridentifizierungskarte (200) umfasst, welche zumindest Folgendes umfasst:
- Speichern einer Kennung eines Heimat-Mobilfunknetzes (HPLMN) in einer ersten Datei;
- Speichern einer aktuellen Netzwerkkennung, welche ein aktuelles Mobilfunknetz definiert, mit dem der Teilnehmer verbunden ist, in einer zweiten Datei, wobei die genannte aktuelle Netzwerkkennung eine aktuelle Landeskennung beinhaltet;
- Speichern zumindest einer Kennung, welche zumindest ein bevorzugtes Mobilfunknetz definiert, in zumindest einer dritten Datei (203);
- fortlaufendes Überwachen, ob ein vorbestimmtes Ereignis (A) eintritt während das Mobiltelefon eingeschaltet ist;
- wenn das genannte Ereignis eintritt, und in Beantwortung des genannten vorbestimmten Ereignisses (A), überprüfen, ob das Mobiltelefon mit einem bevorzugten Mobilfunknetz verbunden ist, das in der dritten Datei (203) definiert ist, oder mit seinem Heimat-Mobilfunknetz (HPLMN), und:
i) wenn das Mobiltelefon mit einem bevorzugten Mobilfunknetz verbunden ist, das in der dritten Datei (203) definiert ist, oder mit dem Heimat-Mobilfunknetz (HPLMN), oder wenn kein bevorzugtes Mobilfunknetz, das in der der dritten Datei (203) definiert ist, dem aktuellen Land entspricht, nicht die aktuelle Netzwerkkennung in der zweiten Datei (202) verändern zu lassen;
ii) wenn das Mobiltelefon mit einem Mobilfunknetz verbunden ist, welches kein bevorzugtes Mobilfunknetz ist, das in der dritten Datei (203) definiert ist, oder dem Heimat-Mobilfunknetz (HPLMN), und wenn zumindest ein Mobilfunknetz, das in der dritten Datei (203) definiert ist, dem aktuellen Land entspricht:
a) Modifizieren der aktuellen Netzwerkkennung in der zweiten Datei (202), so dass sie den Wert einer bevorzugten Mobilfunknetzkennung hat, die aus der dritten Datei (203) ausgewählt ist, und die dem aktuellen Land entspricht;
b) Senden eines Befehls, des SIM-Toolkit-Befehls *REFRESH,* zum Mobiltelefonendgerät (100), um das Mobiltelefon wieder mit einem Mobilfunknetz zu verbinden, wobei das Verfahren **dadurch gekennzeichnet ist, dass** in Beantwortung des SIM-Toolkit-Befehls *REFRESH* das Mobiltelefon versucht, sich mit dem Mobilfunknetz zu verbinden, das durch die modifizierte aktuelle Netzwerkkennung in der zweiten Datei (202) definiert ist, und wenn dies nicht möglich ist, es versucht, sich mit einem der bevorzugten Mobilfunknetze zu verbinden, die in der dritten Datei (203) definiert sind.

14. Verfahren nach Anspruch 13, **dadurch gekennzeichnet, dass** das Ereignis (A) zumindest ein aus im Standard ETSI GSM 11,14, Version 8.4.0 definierten Ereignissen ausgewähltes Ereignis ist.

15. Verfahren nach Anspruch 13, **dadurch gekennzeichnet, dass** das Ereignis (A) zumindest ein aus einer Gruppe von Ereignissen ausgewähltes Ereignis ist, einschließlich einer Benachrichtigung, die eine Änderung in der Location Area angibt, die vom Endgerät (100) zur Karte (200) übertragen wird.

16. Verfahren nach Anspruch 15, **dadurch gekennzeichnet, dass** das vorbestimmte Ereignis (A) eine Benachrichtigung ist, die eine Änderung in der Location Area angibt, die vom Endgerät (100) zur Karte (200) übertragen wird.

17. Verfahren nach einem der Ansprüche 13 bis 16, **dadurch gekennzeichnet, dass** es den Schritt des Überprüfens der Identität des Mobilfunknetzes umfasst, mit dem der Nutzer verbunden ist, indem die aktuelle Netzwerkkennung in der zweiten Datei (202) überprüft wird.

18. Verfahren nach einem der Ansprüche 13 bis 16, **dadurch gekennzeichnet, dass** es den Schritt des Überprüfens der Identität des Mobilfunknetzes umfasst, mit dem der Nutzer verbunden ist, durch den SIM-Toolkit-Befehl *Provide Local Information.*

19. Verfahren nach einem der Ansprüche 13 bis 16, **dadurch gekennzeichnet, dass** es den Schritt des Überprüfens der Identität des Mobilfunknetzes umfasst, mit dem der Nutzer verbunden ist, indem der SIM-Toolkit-Befehl *Location Status* analysiert wird.

20. Verfahren nach einem der Ansprüche 13 bis 19, **dadurch gekennzeichnet, dass** die erste Datei (201) die U/SIM EF_{IMSI}-Datei ist, und dass die zweite Datei (202) die U/SIM EF_{LOCI}-Datei ist.

21. Verfahren nach einem der Ansprüche 13 bis 20, **dadurch gekennzeichnet, dass** es den Schritt des Kopierens der Inhalte der dritten Datei (203) in eine vierte Datei (204) umfasst, welche bevorzugte Mobilfunknetzkennungen einschließt, damit das Mobiltelefon sich mit einem der bevorzugten Mobilfunknetze verbinden kann, die in der dritten Datei (203) definiert sind, indem die Kennungen aus der vierten Datei (204) entnommen werden.

22. Verfahren nach Anspruch 21, **dadurch gekennzeichnet, dass** die vierte Datei (204) die SIM EF_{PLMN-Sel}-Datei oder die USIM EF_{PLMNwAcT}-Datei ist.

23. Verfahren nach einem der Ansprüche 13 bis 22, **dadurch gekennzeichnet, dass** es den zusätzlichen Schritt des Ladens eines U/SIM Application Toolkits in die Karte (200) umfasst, das ausgebildet ist, um die Schritte des in einem der Ansprüche 13 bis 22 definierten Verfahrens auszuführen.

24. **Programmprodukt, welches ein auf einem Prozessor in einer** Teilnehmeridentifizierungskarte ablaufendes Programm umfasst, **dadurch gekennzeichnet, dass** es Programmanweisungsmittel umfasst, um die Schritte des in einem der Ansprüche 13 bis 23 definierten Verfahrens auszuführen.

25. Produkt nach Anspruch 24, **dadurch gekennzeichnet, dass** das Programm in einem Programmträgermittel gespeichert ist.

## Revendications

1. Carte d'identification d'abonné (200) destinée à être utilisée dans un téléphone cellulaire mobile, comprenant au moins un terminal (100) et ladite carte (200), ladite carte (200) comprenant au moins :
- des moyens pour stocker dans un premier fichier (201) un identificateur d'un réseau domestique de téléphonie mobile (HPLMN) ;
- des moyens pour stocker dans un deuxième fichier (202) un identificateur du réseau actuel définissant un réseau actuel de téléphonie mobile auquel l'utilisateur est connecté et incluant un identificateur de pays actuel ;
- des moyens pour stocker dans au moins un troisième fichier (203) au moins un identificateur définissant au moins un réseau de téléphonie mobile préféré ;
- des moyens de détection (210) configurés pour surveiller en continu l'occurrence éventuelle d'un événement (A) prédéterminé pendant que le téléphone mobile est allumé ; et
- des moyens de réponse (211) configurés, en réponse à une occurrence d'un événement (A) prédéterminé, pour vérifier si le téléphone mobile est connecté à un réseau de téléphonie mobile préféré défini dans le troisième fichier (203) ou à son réseau domestique de téléphonie mobile (HPLMN) et :
i) en réponse au téléphone mobile étant connecté à un réseau de téléphonie mobile préféré défini dans le troisième fichier (203) o au réseau domestique de téléphonie mobile (HPLMN), ou en réponse à un réseau non-préféré de téléphonie mobile défini dans le troisième fichier (203) correspondant au pays actuel, les moyens de réponse (211) étant configurés pour faire que les deuxièmes moyens de stockage ne modifient pas l'identificateur de réseau actuel dans le deuxième fichier (202) ;
ii) en réponse au téléphone mobile étant connecté à un réseau de téléphonie mobile qui n'est pas un réseau de téléphonie mobile préféré défini dans le troisième fichier (203) ou le réseau domestique de téléphonie mobile (HPLMN), et en réponse à au moins un réseau de téléphonie mobile défini dans le troisième fichier (203) correspondant au pays actuel :
a) les moyens de réponse (211) étant configurés pour faire que les deuxièmes moyens de stockage modifient l'identificateur de réseau actuel dans le deuxième fichier (202) à la valeur d'un identificateur de réseau de téléphonie mobile préféré sélectionné dans le troisième fichier (203) et correspondant au pays actuel ; et
b) les moyens de réponse (211) étant configurés en outre pour envoyer une commande, qui est la commande REFRESH de la boîte à outils de la SIM au terminal (100) du téléphone mobile faisant que le téléphone mobile se reconnecte à un réseau de téléphonie mobile, le réseau de téléphonie mobile étant dans un essai initial celui défini par l'identificateur de réseau actuel modifié dans le deuxième fichier (202), et en réponse à l'essai initial n'ayant pas de succès, étant dans des essais postérieurs un des réseaux de téléphonie mobile préférés définis dans le troisième fichier (203).

2. Carte selon la revendication 1, **caractérisée en ce que** l'événement (A) est au moins un événement sélectionné parmi des événements définis dans la norme ETSI GSN 11.14, version 8.40.

3. Carte selon la revendication 1, **caractérisée en ce que** l'événement (A) est au moins un événement sélectionné parmi le groupe d'événements incluant une notification indicative d'un changement dans la zone de localisation, transmise depuis le terminal (100) à la carte (200).

4. Carte selon la revendication 3, **caractérisée en ce que** l'événement (A) prédéterminé est une notification indicative d'un changement dans la zone de localisation, transmise depuis le terminal (100) à la carte (200).

5. Carte selon l'une quelconque des revendications précédentes, **caractérisée en ce que** les moyens de réponse comprennent des moyens pour vérifier l'identité du réseau de téléphonie mobile auquel est connecté l'utilisateur, au moyen de la vérification de l'identificateur de réseau actuel dans le deuxième fichier (202).

6. Carte selon l'une quelconque des revendications 1-4, **caractérisée en ce que** les moyens de réponse (211) comprennent des moyens pour vérifier l'identité du réseau de téléphonie mobile auquel est connecté l'utilisateur, au moyen de la commande *Provide Local Information* de la boîte à outils de la SIM.

7. Carte selon l'une quelconque des revendications 1-4, **caractérisée en ce que** les moyens de réponse (211) comprennent des moyens pour vérifier l'identité du réseau de téléphonie mobile auquel est connecté l'utilisateur, au moyen de l'analyse de la commande *Provide Local Information* de la boîte à outils de la SIM.

8. Carte selon l'une quelconque des revendications précédentes, **caractérisée en ce que** le premier fichier (201) est le fichier U/SIM EF_{IMSI} et **en ce que** le second fichier (202) es le fichier U/SIM EF_{LOCI}

9. Carte selon l'une quelconque des revendications précédentes, **caractérisée en ce qu'**elle comprend des moyens pour copier (212) le contenu du troisième fichier (203) dans un quatrième fichier (204) incluant des identificateurs de réseau de téléphonie mobile préférés, afin que le téléphone mobile puisse se connecter à un des réseaux de téléphonie mobile préférés définis dans le troisième fichier (203) en obtenant les identificateurs du quatrième fichier (204).

10. Carte selon la revendication 9, **caractérisée en ce que** le quatrième fichier (204) est le fichier SIM EF_{PLMN-Sel} ou le fichier USIM EF_{PLMNwAcT}.

11. Carte selon l'une quelconque des revendications précédentes, **caractérisée en ce que** les moyens de détection (210) et les moyens de réponse (211) sont réglés par au moins une boite à outil de l'application U/SIM.

12. Téléphone mobile comprenant un terminal (100) et une carte d'identification d'abonné (200) selon l'une quelconque des revendications précédentes, le téléphone mobile étant configuré pour se connecter par défaut à un réseau correspondant à l'identificateur de réseau actuel dans le deuxième fichier (202).

13. Procédé pour mettre en oeuvre la connexion d'un téléphone mobile à un réseau de téléphonie mobile désiré pour un téléphone mobile comprenant un terminal (100) et une carte d'identification d'abonné (200) comprenant au moins :
- le stockage dans un premier fichier (201) d'un identificateur d'un réseau domestique de téléphonie mobile (HPLMN) ;
- le stockage dans un deuxième fichier (202) d'un identificateur du réseau actuel définissant un réseau actuel de téléphonie mobile auquel le l'utilisateur est connecté et incluant ledit identificateur de réseau actuel un identificateur de pays actuel ;
- le stockage dans au moins un troisième fichier (203) d'au moins un identificateur définissant au moins un réseau de téléphonie mobile préféré ;
- surveiller en continu l'occurrence d'un événement (A) prédéterminé pendant que le téléphone mobile est allumé ;
- si ledit événement a lieu, et en réponse audit événement (A) prédéterminé, vérifier si le téléphone mobile est connecté à un réseau de téléphonie mobile préféré défini dans le troisième fichier (203) o à son réseau domestique de téléphonie mobile (HPLMN) et :
i) si le téléphone mobile est connecté à un réseau de téléphonie mobile préféré défini dans le troisième fichier (203) o au réseau domestique de téléphonie mobile (HPLMN), ou si le réseau de téléphonie mobile non-préféré défini dans le troisième fichier (203) correspond au pays actuel, no pas modifier l'identificateur de réseau actuel dans le deuxième fichier (202) ;
ii) si le téléphone mobile est connecté à un réseau de téléphonie mobile qui n'est pas un réseau de téléphonie mobile préféré défini dans le troisième fichier (203) ou le réseau domestique de téléphonie mobile (HPLMN), et si au moins un réseau de téléphonie mobile défini dans le troisième fichier (203) correspond au pays actuel :
a) modifier l'identificateur de réseau actuel dans le deuxième fichier (202) de façon à avoir la valeur d'un identificateur de réseau de téléphonie mobile préféré sélectionné dans le troisième fichier (203) et correspondant au pays actuel ; et
b) envoyer une commande, qui est la commande REFRESH de la boîte à outils de la SIM au terminal du téléphone mobile (100) pour reconnecter le téléphone mobile à un réseau de téléphonie mobile, le procédé étant **caractérisé en ce que**, en réponse à la commande REFRESH de la boîte à outils de la SIM, le téléphone mobile essaie de se connecter au réseau de téléphonie mobile défini par le l'identificateur de réseau actuel modifié dans le deuxième fichier (202), et si cela n'est pas possible, il essaie de se connecter à un des réseau de téléphonie mobile préférés définis dans le troisième fichier (203).

14. Procédé selon la revendication 13, **caractérisé en ce que** l'événement (A) est au moins un événement sélectionné parmi les événements définis dans la norme ETSI GSN 11.14, version 8.4.0.

15. Procédé selon la revendication 13, **caractérisé en ce que** l'événement (A) est au moins un événement sélectionné dans le groupe d'événements incluant une notification indicative d'un changement dans la zone de localisation, transmise depuis le terminal (100) à la carte (200).

16. Procédé selon la revendication 15, **caractérisé en ce que** l'événement (A) prédéterminé est une notification indicative d'un changement dans la zone de localisation, transmise depuis le terminal (100) à la carte (200).

17. Procédé selon l'une quelconque des revendications 13-16, **caractérisé en ce qu'**il comprend l'étape de vérifier l'identité du réseau de téléphonie mobile auquel est connecté l'utilisateur, au moyen de la vérification de l'identificateur de réseau actuel dans le deuxième fichier (202).

18. Procédé selon l'une quelconque des revendications 13-16, **caractérisé en ce qu'**il comprend l'étape de vérifier l'identité du réseau de téléphonie mobile auquel est connecté l'utilisateur, au moyen de la commande *Provide Local Information* de la boite à outils de la SIM

19. Procédé selon l'une quelconques des revendications 13-16, **caractérisée en ce qu'**il comprend l'étape de vérifier l'identité du réseau de téléphonie mobile auquel est connecté l'utilisateur, au moyen de l'analyse de la commande *Provide Local Information* de la boite à outils de la SIM.

20. Procédé selon l'une quelconque des revendications 13-19, **caractérisé en ce que** le premier fichier (201) est le fichier U/SIM EF_{IMSI} et **en ce que** le second fichier (202) es le fichier U/SIM EF_{LOCI}.

21. Procédé selon l'une quelconque des revendications 13-20, **caractérisé en ce qu'**il comprend l'étape de copier (212) le contenu du troisième fichier (203) dans un quatrième fichier (204) incluant des identificateurs de réseau de téléphonie mobile préférés, afin que le téléphone mobile puisse se connecter à un des réseaux de téléphonie mobile préférés définis dans le troisième fichier (203) en obtenant les identificateurs du quatrième fichier (204).

22. Procédé selon la revendication 21, **caractérisé en ce que** le quatrième fichier (204) est le fichier SIM EF_{PLMN-Sel} ou le fichier USIM EF_{PLMNwAcT}.

23. Procédé selon l'une quelconque des revendications 13-22, **caractérisé en ce qu'**il comprend l'étape additionnelle de charger dans la carte (200) une boite à outil de l'application U/SIM, configurée pour mettre en oeuvre les étapes du procédé défini dans l'une quelconques des revendications 13-22.

24. Produit de programme comprenant un programme exécuté sur un processeur dans une carte d'identification d'abonné, **caractérisé en ce qu'**il comprend des moyens d'instruction de programme pour réaliser les étapes du procédé défini dans l'une quelconques des revendications 13-23.

25. Produit selon la revendication 24, **caractérisé en ce que** le programme est stocké dans un moyen de support de programme.
